# EUROPEAN PATENT SPECIFICATION

(11) **EP 1 218 228 B1**
(45) Date of publication and mention of the grant of the patent: **25.08.2004**
(21) Application number: 00973394.0
(22) Date of filing: 02.10.2000
(51) Int. Cl.: B60R 25/04, E05B 49/00

(54) **EXTERIOR MOUNTED ACCESS DEVICE CONTROL FOR A VEHICLE PASSIVE ENTRY SYSTEM**
PASSIVES ZUGANGSSYSTEM FÜR FAHRZEUGE
CONTROLEUR D'ACCES MONTE A L'EXTERIEUR POUR SYSTEME D'ENTREE PASSIF POUR VEHICULE

(30) Priority: 04.10.1999 US 157598 P; 04.10.1999 US 157596 P
(43) Date of publication of application: 03.07.2002
(73) Proprietor: Siemens VDO Automotive Corporation, Auburn Hills, Michigan 48326-2980 (US); General Motors Corporation, Detroit, Michigan 48265-3000 (US); Huf North America, Greenville, TN 37744 (US)
(72) Inventor: PROEFKE, David, T., Madison Heights, MI 48071 (US); UTTER, Thomas, E., Royal Oak, MI 48073 (US); BAILLARGEON, Robert, C., Utica, MI 48317 (US); PFEFFER, Thomas, W., Rochester, MI 48307 (US); COIL, Jeffrey, R., Milford, MI 48381 (US); BRENZ, Andrew, C., Lake Orion, MI 48360 (US); ORLANDO, Kenneth, P., Sterling Heights, MI 48313 (US); DESAI, Tejas, B., Sterling Heights, MI 48324 (US); JOHNSON, Christian, O., Rochester Hills, MI 48309 (US); PLICHTA, Ronald, J., Rochester Hills, MI 48306 (US)
(74) Representative: Humphrey-Evans, Edward John
(86) International application number: PCT/US2000/027100
(87) International publication number: WO 2001/025062

(56) References cited:
- EP-A- 0 523 602
- WO-A-99/36295
- US-A- 5 396 216
- US-A- 5 929 769

## Description

### BACKGROUND OF THE INVENTION

This invention relates to improvements in using passive signalling devices, which are sometimes referred to as "smart cards" or "electronic keys". More particularly, this invention includes a strategy to control access to a vehicle having a smart car entry system.

Keyless vehicle access systems are increasingly incorporated into modern day vehicles. One example includes a keyless entry system where a vehicle owner utilises manual switches on a keyfob to accomplish functions such as unlocking the vehicle doors or trunk or remotely turning on the ignition of the vehicle.

A more recently proposed system includes a passive remote signalling device such as a card that is carried by a vehicle owner. The system controller on the vehicle receives signals from the passive signalling device without requiring any manual activation by the user. It has been proposed to use such passive signalling devices to enable a driver to turn a vehicle engine on or off without requiring a mechanical key. The system controller only responds to switch activation when an appropriate authentication code is received from a valid passive signalling device.

Those skilled in the art are always striving to improve upon existing systems. This invention provides unique vehicle access capability using a passive signalling device. Additionally, this invention provides additional control features for security purposes.

EP-A-0.523,602 (BMW AG)(Preamble of claims 1 and 6) discloses a procedure for detecting a portable transponder locked within a vehicle.

### SUMMARY OF THE INVENTION

In general terms, this invention is a vehicle access system that includes a passive signalling device that provides an authentication code without requiring any manual activation by a user. A manually operated device (such as a door handle) is supported on an exterior of the vehicle that is operated to generate a command to perform an access function. A controller detects operation of the manually operated device and only performs the requested access function when the authentication code is received from the passive signaling device. The controller preferably sends an initiation signal, to which the passive signaling device automatically responds.

Another feature of this invention is that it prevents unauthorized access to the vehicle when the passive signaling device is inside of the vehicle interior. The controller preferably is programmed to detect the presence of the passive signaling device and its location. In one example, the controller will only permit the access function to be performed when the passive signaling device is outside of the vehicle and near the manually operated device that generated the command for the access function.

The various features and advantages of this invention will become apparent to those skilled in the art from the following detailed description of the currently preferred embodiments. The drawings that accompany the detailed description can be briefly described as follows.

### BRIEF DESCRIPTION OF THE DRAWINGS

Figure 1 schematically illustrates a system designed according to this invention.
Figure 2 is a flowchart diagram illustrating a method of this invention.

### DETAILED DESCRIPTION OF A PREFERRED EMBODIMENT

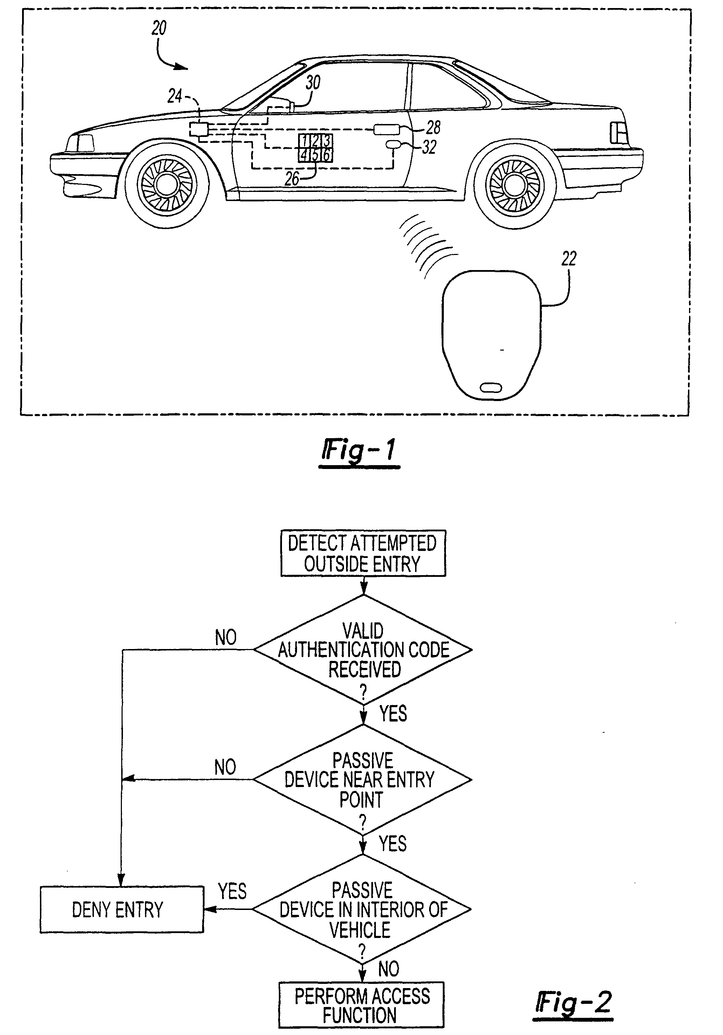

Figure 1 illustrates a vehicle access system 20 including a passive signaling device 22. In the illustrated example, the passive signaling device 22 is a card that is conveniently carried about by a vehicle owner. The passive signaling device of this invention may be referred to as an electronic key within this specification. The passive signaling device 22 provides an authentication code or signal to a controller 24 supported on the vehicle. The passive signaling device does not require any manual activation by the user to generate the authentication code.

The controller 24 preferably is programmed to control access devices that permit access to the vehicle. A key pad 26 is one such device while a door handle 28 is another such device. The key pad 26 or the door handle 28 preferably are associated with one or more switches that are activated to generate a command signal that is interpreted by the controller 24. The command signals preferably indicate the desired access to the vehicle. The controller 24 preferably is programmed to only perform the desired access function when a valid authentication code is received from the passive signaling device 22.

The controller 24 preferably is programmed to perform a variety of access functions depending on the command signals received. Example access functions include unlocking all vehicle doors, locking all vehicle doors, double locking all vehicle doors, opening one or more windows, closing one or more windows, and opening or closing a vehicle sunroof.

In one example, operation of the door handle 28 ultimately results in unlocking the corresponding door, provided that a valid authentication code is received from the passive signaling device 22 responsive to an initiation signal from the controller 24. Operation of one or more of the keys on the key pad 26 provides the ability to perform a corresponding function, such as unlocking all vehicle doors. A system designed according to this invention provides greater versatility to a vehicle owner with increased convenience compared to prior systems. Provided that the authentication from the electronic key 22 is valid, the keypad may be used without requiring the car owner to memorize sequences of keys for the various functions. Instead, the authorization code allows for simple, single-key operation, for example.

Another feature of this invention is to prevent unauthorized access to the vehicle by another individual other than the vehicle owner. For example, it is desirable to prevent a "car jacker" from approaching the vehicle and being able to operate the door handle 28 to gain access to the vehicle while the vehicle owner and the passive signaling device 22 are inside of the vehicle. Accordingly, the controller 24 preferably is programmed to only perform the vehicle access function (such as unlocking the door) when the passive signaling device 22 is determined to be outside of the vehicle and most preferably near the vehicle access point of the manually operated device.

Figure 1 schematically illustrates a sensor 30 that detects whether the passive signaling device 22 is within the interior of the vehicle. Similarly, a sensor 32 is positioned to detect the presence of a passive signaling device outside of the vehicle near the key pad 26 or door handle 28. these sensors provide information to the controller to determine the location of the electronic key 22 and to control the access function accordingly.

The controller 24 preferably monitors and stores the identification of all passive signaling devices 22 within the interior of the vehicle during normal vehicle operation. When a command signal is generated by operation of the key pad 26 or door handle 28, for example, the controller seeks an authorization code from an electronic key 22. The controller then preferably compares the identification of the responsive passive signaling device 22 with the identification of all such devices that were located within the interior of the vehicle. If the passive signaling device 22 from which the authentication code was received is identified as having been inside of the vehicle, the controller 24 preferably again scans the interior of the vehicle. If the passive signaling device is located inside of the vehicle, the vehicle access function is denied. If however, the passive signaling device is now outside of the vehicle, then the controller 24 performs the desired vehicle access function.

Figure 2 includes a flowchart diagram 40 that illustrates the preferred flow of steps taken by the controller 24 when performing a method of this invention. Most preferably, the vehicle access or entry function is not performed unless the passive signaling device is outside of the vehicle near the location of the manually operated device.

This invention provides enhanced convenience to a vehicle owner by utilizing a passive signaling device to provide an authentication signal that allows a vehicle owner to gain entry to the vehicle. Additionally, a system designed according to this invention provides enhanced security features that prevent unauthorized individuals from gaining access to the vehicle when the vehicle owner is inside of the vehicle.

The preceding description is exemplary rather than limiting in nature.

## Claims

1. A vehicle access system (20), comprising:
a passive signaling device (22) that provides an authentication code without requring any manual activation by a user;
a manually operated device (26,28) supported on an exterior of the vehicle that is operable to generate a command to perform an access function;
a controller (24) that detects operation of the manually operated device (26,28) and only performs the access function when the authentication code is received from the passive signaling device; and
**characterized by** the controller (24) determining the presence of all passive signaling devices (22) within an interior of the vehicle, identifying all such passive signaling devices, storing the identity of such devices, the controller determining if the identity of the passive signaling device from which the authentication code is received is stored, and is currently within the vehicle interior and does not perform the access function if the passive signaling device from which the authentication code was received is within the interior of the vehicle.

2. The system of claim 1, wherein the controller (24) only performs the access function if the passive signaling device (22) is outside of the vehicle and near the location of the manually operated device (26,28).

3. The system of claim 1, wherein the manually operated device includes a door handle (28).

4. The system of claim 1, wherein the manually operated device includes a keypad (26) of selectively activated switches and further **characterized by** the keypad (26) operating in a first mode when the passive signaling device (22) is outside of the vehicle, the first mode allowing the user to command multiple access functions each with a single keyp ad switch activation, the keypad (26) operating in a second mode when the passive signaling device (22) is not outside of the vehicle, the second mode requiring multiple keypad switch operations in a predetermined sequence to command an access function.

5. The system of claim 4, wherein the keypad (26) is operable in the first mode to generate a first command corresponding to a desire to unlock only one door lock on the vehi cle and a second command corresponding to a desire to unlock multiple door locks on the vehicle.

6. A method of controlling a vehicle access system (20) having a passive signaling device (22) that provides an authentication code without requiring any manual activation by a user and a manually operated device (26,28) supported on an exterior of the vehicle that is operated to generate a command corresponding to an access function, comprising the steps of:
(A) detecting the command from operation of the manually operated device (2628);
(B) detecting the authentication code from the passive signaling device (22);
(C) determining whether the authentication code is valid; and **characterized by**
(D) determining the presence of all passive signaling devices (22) within an interior of the vehicle;
(E) identifying all such passive signaling devices (22);
(F) storing the identity of such devices (22);
(G) determining if the identity of the passive signaling device (22) from which the authentication code is received is stored;
(H) determining whether the passive signaling device (22) from which the authentication code is received is currently within the vehicle interior; and
(I) performing the access function if the passive signaling device (22) from which the authentication code was received is outside of the vehicle.

7. The method of claim 6, including performing step (C) only when the signaling device (22) is outside of the vehicle and near the location of the manually operated device (26 28).

8. The method of claim 6, wherein the manually operated device includes a keypad (26) of selectively activated switches and further **characterized by**
operating the keypad (26) in a first mode when the passive signaling device (22) is outside of the vehicle, the first mode allowing the user to command multiple access functions each with a single keypad switch activation; and
operating the keypad (26) in a second mode when the passive signaling device (22) is not outside of the vehicle, the second mode requiring multiple keypad switch operations in a predetermined sequence to command an access function.

9. The method of claim 8, including operating the keypad (26) in the first mode to generate a first command corresponding to a desire to unlock only one door lock on the vehicle and a second command corresponding to a desire to unlock multiple door locks on the vehicle.

## Patentansprüche

1. Fahrzeug-Zugangssystem (20), welches umfasst:
eine passive Signalisierungseinrichtung (22), welche einen Authentifizierungscode liefert, ohne dass irgendeine manuelle Betätigung durch einen Benutzer erforderlich ist;
eine handbetätigte Vorrichtung (26, 28), die an der Außenseite des Fahrzeugs angebracht ist und in der Lage ist, einen Befehl, eine Zugangsfunktion auszuführen, zu erzeugen;
ein Steuergerät (24), welches die Betätigung der handbetätigten Vorrichtung (26, 28) erkennt und die Zugangsfunktion nur dann ausführt, wenn der Authentifizierungscode von der passiven Signalisierungseinrichtung empfangen wird;
**dadurch gekennzeichnet, dass** das Steuergerät (24) das Vorhandensein aller passiven Signalisierungseinrichtungen (22) in einem Innenraum des Fahrzeugs bestimmt, alle solchen passiven Signalisierungseinrichtungen identifiziert und die Kennung dieser Einrichtungen speichert, wobei das Steuergerät bestimmt, ob die Kennung der passiven Signalisierungseinrichtung, von welcher der Authentifizierungscode empfangen wurde, gespeichert ist und diese Einrichtung sich gegenwärtig im Innenraum des Fahrzeugs befindet, und die Zugangsfunktion nicht ausführt, falls die passive Signalisierungseinrichtung, von welcher der Authentifizierungscode empfangen wurde, sich im Innenraum des Fahrzeugs befindet.

2. System nach Anspruch 1, wobei das Steuergerät (24) die Zugangsfunktion nur dann ausführt, wenn sich die passive Signalisierungseinrichtung (22) außerhalb des Fahrzeugs und in der Nähe der Position der handbetätigten Vorrichtung (26, 28) befindet.

3. System nach Anspruch 1, wobei die handbetätigte Vorrichtung einen Türgriff (28) umfasst.

4. System nach Anspruch 1, wobei die handbetätigte Vorrichtung ein Tastenfeld (26) aus selektiv betätigten Schaltern umfasst, ferner **dadurch gekennzeichnet, dass** das Tastenfeld (26) in einer ersten Betriebsart arbeitet, wenn sich die passive Signalisierungseinrichtung (22) außerhalb des Fahrzeugs befindet, wobei die erste Betriebsart dem Benutzer ermöglicht, mehrere Zugangsfunktionen jeweils mit einer einzigen Betätigung eines Tastenfeld-Schalters anzusteuern, und wobei das Tastenfeld (26) in einer zweiten Betriebsart arbeitet, wenn sich die passive Signalisierungseinrichtung (22) nicht außerhalb des Fahrzeugs befindet, wobei die zweite Betriebsart mehrere Betätigungen von Tastenfeld-Schaltern in einer vorgegebenen Reihenfolge erfordert, um eine Zugangsfunktion anzusteuern.

5. System nach Anspruch 4, wobei das Tastenfeld (26) in der ersten Betriebsart in der Lage ist, einen ersten Befehl zu erzeugen, der einem Wunsch entspricht, nur ein Türschloss am Fahrzeug zu entriegeln, und einen zweiten Befehl, der einem Wunsch entspricht, mehrere Türschlösser am Fahrzeug zu entriegeln.

6. Verfahren zur Steuerung eines Fahrzeug-Zugangssystems (20) mit einer passiven Signalisierungseinrichtung (22), welche einen Authentifizierungscode liefert, ohne dass irgendeine manuelle Betätigung durch einen Benutzer erforderlich ist, und einer handbetätigten Vorrichtung (26, 28), die an der Außenseite des Fahrzeugs angebracht ist und die betätigt wird, um einen Befehl, der einer Zugangsfunktion entspricht, zu erzeugen, welches die folgenden Schritte umfasst:
(A) Erkennen des Befehls aus der Betätigung der handbetätigten Vorrichtung (26, 28);
(B) Erkennen des Authentifizierungscodes von der passiven Signalisierungseinrichtung (22);
(C) Bestimmen, ob der Authentifizierungscode gültig ist; und **gekennzeichnet durch**
(D) Bestimmen des Vorhandenseins aller passiven Signalisierungseinrichtungen (22) in einem Innenraum des Fahrzeugs;
(E) Identifizieren aller solchen passiven Signalisierungseinrichtungen (22);
(F) Speichern der Kennung aller solchen Einrichtungen (22);
(G) Bestimmen, ob die Kennung der passiven Signalisierungseinrichtung (22), von welcher der Authentifizierungscode empfangen wird, gespeichert ist;
(H) Bestimmen, ob sich die passive Signalisierungseinrichtung (22), von welcher der Authentifizierungscode empfangen wird, gegenwärtig im Innenraum des Fahrzeugs befindet; und
(I) Ausführen der Zugangsfunktion, falls sich die passive Signalisierungseinrichtung (22), von welcher der Authentifizierungscode empfangen wurde, außerhalb des Fahrzeugs befindet.

7. Verfahren nach Anspruch 6, welches die Ausführung von Schritt (C) nur dann umfasst, wenn sich die Signalisierungseinrichtung (22) außerhalb des Fahrzeugs und in der Nähe der Position der handbetätigten Vorrichtung (26, 28) befindet.

8. Verfahren nach Anspruch 6, wobei die handbetätigte Vorrichtung ein Tastenfeld (26) aus selektiv betätigten Schaltern umfasst, ferner **gekennzeichnet durch**
Betätigen des Tastenfelds (26) in einer ersten Betriebsart, wenn sich die passive Signalisierungseinrichtung (22) außerhalb des Fahrzeugs befindet, wobei die erste Betriebsart dem Benutzer ermöglicht, mehrere Zugangsfunktionen jeweils mit einer einzigen Betätigung eines Tastenfeld-Schalters anzusteuern; und
Betätigen des Tastenfelds (26) in einer zweiten Betriebsart, wenn sich die passive Signalisierungseinrichtung (22) nicht außerhalb des Fahrzeugs befindet, wobei die zweite Betriebsart mehrere Betätigungen von Tastenfeld-Schaltern in einer vorgegebenen Reihenfolge erfordert, um eine Zugangsfunktion anzusteuern.

9. Verfahren nach Anspruch 8, welches das Betätigen des Tastenfelds (26) in der ersten Betriebsart umfasst, um einen ersten Befehl zu erzeugen, der einem Wunsch entspricht, nur ein Türschloss am Fahrzeug zu entriegeln, und einen zweiten Befehl, der einem Wunsch entspricht, mehrere Türschlösser am Fahrzeug zu entriegeln.

## Revendications

1. Système d'accès à un véhicule (20), comprenant :
un dispositif passif de signalisation (22) qui fournit un code d'authentification sans requérir une quelconque activation manuelle de la part d'un utilisateur ;
un dispositif à commande manuelle (26, 28) monté sur une face extérieure du véhicule qui est utilisable pour produire une commande pour exécuter une fonction d'accès ;
un régisseur (24) qui détecte le fonctionnement du dispositif à commande manuelle (26, 28) et n'exécute la fonction d'accès que lorsque le code d'authentification est reçu du dispositif passif de signalisation,
**caractérisé en ce que** le régisseur (24) détermine la présence de tous les dispositifs passifs de signalisation (22) à l'intérieur du véhicule, identifie tous les dispositifs passifs de signalisation de ce genre, met en mémoire l'identité de tels dispositifs, le régisseur déterminant si l'identité du dispositif passif de signalisation duquel le code d'authentification est reçu, est en mémoire et est actuellement à l'intérieur du véhicule, et n'exécutant pas la fonction d'accès si le dispositif passif de signalisation duquel le code d'authentification a été reçu, est à l'intérieur du véhicule.

2. Système selon la revendication 1, dans lequel le régisseur (24) n'exécute la fonction d'accès que si le dispositif passif de signalisation (22) est à l'extérieur du véhicule et près de l'emplacement du dispositif à commande manuelle (26, 28).

3. Système selon la revendication 1, dans lequel le dispositif à commande manuelle est constitué par une poignée de porte (28).

4. Système selon la revendication 1, dans lequel le dispositif à commande manuelle est constitué par un clavier (26) de commutateurs activés sélectivement et **caractérisé par** ailleurs par l'utilisation du clavier (26) selon un premier mode lorsque le dispositif passif de signalisation (22) est à l'extérieur du véhicule, le premier mode permettant à l'utilisateur de commander plusieurs fonctions d'accès, chacune par l'activation d'un seul commutateur du clavier, par l'utilisation du clavier (26) selon un second mode lorsque le dispositif passif de signalisation (22) n'est pas à l'extérieur du véhicule, le second mode requérant plusieurs manipulations de commutateurs du clavier selon une séquence prédéterminée pour commander une fonction d'accès.

5. Système selon la revendication 4, dans lequel le clavier (26) est utilisable dans le premier mode pour produire une première commande correspondant au souhait de déverrouiller seulement une serrure de porte du véhicule et une seconde commande correspondant au souhait de déverrouiller plusieurs serrures de porte du véhicule.

6. Procédé pour régir un système (20) d'accès à un véhicule comportant un dispositif passif de signalisation (22) qui fournit un code d'authentification sans requérir une quelconque activation manuelle de la part d'un utilisateur et un dispositif à commande manuelle (26, 28) monté sur une face extérieure du véhicule qui est manipulé pour produire une commande correspondant à une fonction d'accès, comprenant les étapes consistant à :
(A) détecter la commande provenant de la manipulation du dispositif à commande manuelle (26, 28) ;
(B) détecter le code d'authentification provenant du dispositif passif de signalisation (22) ;
(C) déterminer si le code d'authentification est valide, **caractérisé par** le fait :
(D) de déterminer la présence de tous les dispositifs passifs de signalisation (22) à l'intérieur du véhicule ;
(E) d'identifier tous les dispositifs passifs de signalisation (22) de ce genre ;
(F) de mettre en mémoire l'identité de tels dispositifs (22) ;
(G) de déterminer si l'identité du dispositif passif de signalisation (22) duquel le code d'authentification est reçu, est en mémoire ;
(H) de déterminer si le dispositif passif de signalisation (22) duquel le code d'authentification est reçu, est actuellement à l'intérieur du véhicule, et
(I) d'exécuter la fonction d'accès si le dispositif passif de signalisation (22) duquel le code d'authentification a été reçu, est à l'extérieur du véhicule.

7. Procédé selon la revendication 6, comprenant l'exécution de l'étape (C) uniquement lorsque le dispositif de signalisation (22) est à l'extérieur du véhicule et près de l'emplacement du dispositif à commande manuelle (26, 28).

8. Procédé selon la revendication 6, dans lequel le dispositif à commande manuelle est constitué par un clavier (26) de commutateurs activés sélectivement et **caractérisé par** ailleurs par :
l'utilisation du clavier (26) selon un premier mode lorsque le dispositif passif de signalisation (22) est à l'extérieur du véhicule, le premier mode permettant à l'utilisateur de commander plusieurs fonctions d'accès, chacune par activation d'un seul commutateur du clavier, et
l'utilisation du clavier (26) selon un second mode lorsque le dispositif passif de signalisation (22) n'est pas à l'extérieur du véhicule, le second mode requérant plusieurs manipulations de commutateurs du clavier selon une séquence prédéterminée pour commander une fonction d'accès.

9. Procédé selon la revendication 8, comprenant l'utilisation du clavier (26) selon un premier mode pour produire une première commande correspondant à un souhait de déverrouiller seulement une serrure de porte du véhicule et une seconde commande correspondant au souhait de déverrouiller plusieurs serrures de porte du véhicule.
